# EUROPEAN PATENT SPECIFICATION

(11) **EP 2 658 627 B1**
(45) Date of publication and mention of the grant of the patent: **27.04.2016**
(21) Application number: 11730749.6
(22) Date of filing: 23.05.2011
(51) Int. Cl.: B01D 17/02, B01D 17/04

(54) **PLANT FOR ACCELERATED SEPARATION OF MULTIPHASE FLUID**
ANLAGE ZUR BESCHLEUNIGTEN TRENNUNG VON MEHRPHASIGEN FLÜSSIGKEITEN
SYSTÈME DE SÉPARATION ACCÉLÉRÉE DES FLUIDES MULTIPHASIQUES

(30) Priority: 28.12.2010 IT TO20101073
(43) Date of publication of application: 06.11.2013
(73) Proprietor: Sanseverino, Michele, 70124 Bari (IT)
(72) Inventor: Sanseverino, Michele, 70124 Bari (IT)
(74) Representative: Bruni, Giovanni
(86) International application number: PCT/IB2011/052229
(87) International publication number: WO 2012/090077

(56) References cited:
- EP-A2- 0 949 323
- FR-A1- 2 591 128
- GB-A- 480 947
- GB-A- 1 203 094
- GB-A- 2 050 205
- US-A- 3 260 572
- US-A- 4 058 463
- US-A- 4 504 396
- US-A- 4 512 883
- US-A- 5 137 643
- US-A- 5 314 618
- US-A- 5 464 533
- US-A- 5 840 198

## Description

The present invention relates to a system for accelerating the separation of multi-phase fluids, i.e. liquids with different density. It is frequent, in fact, the need to decontaminate a fluid, for example water, from one or more contaminants, for example oily phases. In these cases, it is essential a system able to provide rapidly and efficiently the separation of two or more non-miscible phases, with different density. More advantageously, the system has to be able to treat fluids in turbulent flow, so that it is possible to manage significant fluid flow rates as well.

At the state of the art, there are not known systems for an efficient separation of fluids comprising liquids with different density. The known systems are limited to the separation of bi-phase fluids and are based on the following principles, which are used completely or partially, depending on the kind of the system: the coalescence principle, which induces the aggregation phenomenon in the dispersed fluid particles by means of coalescent filters or flow canalization batteries; the separation principle which induces a regimen of laminar flow in the bi-phase fluid in order to nullify the force vectors peculiar to a regimen of turbulent flow, as well as a natural physical separation of the two fluids, with speed proportional to their density difference; finally, the extraction principle of the dispersed fluid which separates the fluid with lower density by using a skimmer or by overflowing, always in regimen of laminar flow. Prior documents describing such concepts are: EP0846485, EP0955076, WO2005/035995, US5840198**,** US3260572 and WO 2003/039706.

The technical problem unsolved by the known systems is that none of them is able to accelerate the process of separation of the fluid containing liquids with different density in order to exploit the density difference thereof.

Moreover, the mentioned systems have great limits linked to the following negative aspects:
- limitation of the fluid flow rate to be treated. Since there is no acceleration principle of the separation phenomenon, a need exists to limit the treated flow rates so that the fluid has a regimen of laminar flow, which is essential for the separation of the two fluids;
- the residue contamination levels of the treated fluid remain high;
- low efficiency. Due to the limits peculiar to the physical principles on which they are based, the mentioned systems are not able to separate bi-phase fluids with concentration of low density fluid greater than 50%;
- high dimensions. In order to allow the rest state of the fluid, while the flow rates to be treated increase, the volume needed to bring the fluid in the rest state increases proportionally; therefore, the phenomenon of physical separation of the two fluids, if no acceleration of the same occurs, requires long decantation times;
- none of the mentioned systems is able to intercept fluid particles dispersed in turbulent flow, since they are not on the withdrawal surface of the fluid to be treated;
- strongly limited use conditions. In order to guarantee that the physical principles on which they are based occurs, the above-described systems can be used almost exclusively in static applications.

The present inventor has yet contributed to the solution of the technical problem of accelerating the separation of the phases of a bi-phase fluid in turbulent flow. In fact, the European patent application EP 2066420 describes a system and respective method of usage for accelerating the separation of bi-phase fluids. The system is designed for the treatment of bi-phase fluids in turbulent flow and so provided with great flow rates and uses a battery of coalescence filters, followed by a plurality of gauged orifices or diffusers with divergent section, which transform the fluid turbulent flow in laminar flow and allow its lamination with consequent separation of the two phases in the next phase separator.

Despite the high separation efficiency, reached in the experiments carried out and approximately equal to 99%, the preceding invention provides some drawbacks which are essentially linked to the usage of coalescence filters which clog up frequently: the practical applications are therefore limited to fluids with a low pollutant level and do not comprise the case of multi-phase liquids.

The present invention aims at solving the above mentioned technical problems by providing a system for accelerating the separation also of multi-phase fluids, i.e. comprising a number of fluids with different density equal to two or more, which comprises means for pushing the fluid to be treated, sensors and actuators for controlling the flow rate, pressure and temperature, one or more reservoirs for collecting liquids with lower density, a phase separator able to generate a controlled field of fluid speed which is related to the density of the fluids to be treated, which does not use coalescence filters and gauged orifices to transform the turbulent in laminar flow, but has pump means which are provided with hydraulic conveyor. Said pump means can be advantageously made up of a peristaltic pump provided with stigmas.

According to another aim, the phase separator reservoir is provided with one or more output holes for the phases with lower density provided in the upper portion of the separator, this latter being realized with a suitable tapering angle.

This technical measure allows a better aggregation of the particles to be separated (normally oily particles), reducing the residue quantity of the same in the main fluid to be treated (for example water).

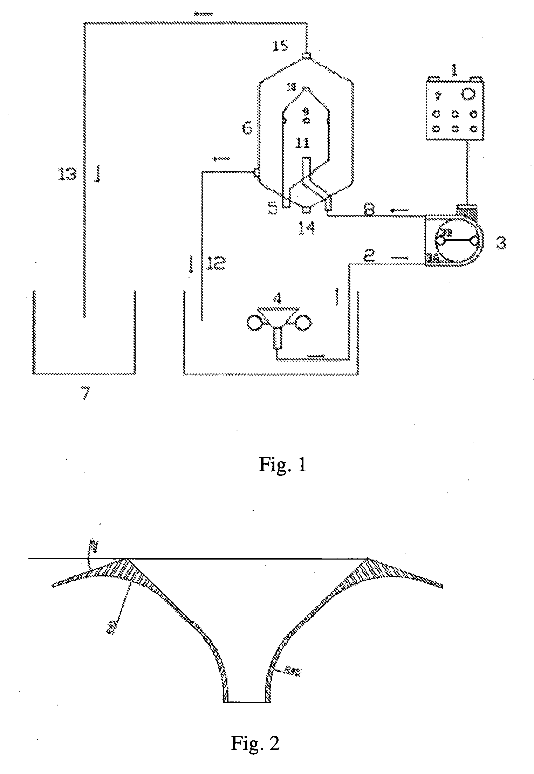

These and other advantages will be better highlighted in the detailed description of the invention, which refers specifically to figure 1 and 2, in which it is represented an absolutely nonlimiting, preferred embodiment of the system and of the process scheme. In particular:
Fig. 1 shows a preferred embodiment of the separation system according to the present invention;
Fig. 2 shows an advantageous profile of the suction inlet.

The system, object of the present invention is apt to separate the phases of any multi-phase liquid, characterized by phases with different density. Referring to figure 1, the inventive system comprises: a switchboard (1), a feeding pipe (2), a fluid pushing means (3), a phase separator (in the following also "outer cylinder" or also "second chamber") (6) and at least a reservoir for collecting the phases with lower density (7). Sensors and actuators for controlling flow rates, pressure and temperature. As pushing means (3), the system has a pump means provided with hydraulic conveyor and according to a preferred but not limiting embodiment said pump means can be a peristaltic pump, to which a suction inlet (4) is connected. According to another preferred embodiment, the system comprises a suction chamber (in the following also "acceleration chamber", "inner cylinder" or also "first chamber") (11) arranged in the separator (6), a plurality of output holes (9, 10) of the phases with lower density to be separated, which are provided also in the upper portion of the acceleration chamber and on the shell thereof. Such upper portion is conically shaped with suitable tapering angle. Unlike the embodiment provided in the preceding patent application EP 2066420, said system does not use any type of coalescence filter which used to aggregate the oily or in general contaminant particles. This fact allows to work with extremely dirty fluids without running into the clogging up problems of the coalescence filters. If there is no filtering system, the same effect of aggregation is reached by adjusting the input flow in the acceleration chamber introducing a peristaltic pump which sucks the liquids with different density (for example oil, oil sludge, etc...) through a suction inlet (4) i.e. a sort of auto-adjusting floating funnel, whose mechanic profile is designed to minimize the turbulence in the sucked fluid (see for example fig. 2).

In particular, the suction inlet is useful in all those cases in which it is needed to separate a fluid with lower density dispersed in a second fluid with greater density, as it often occurs when the two fluids are contained in a reservoir or the fluid with lower density is dispersed in the surface layer of seas and lakes. The application of the suction inlet is advantageous since it allows to convey richer surface layers of lower density liquid in the separator.

As it is known, the peristaltic pump is a working machine which applies the peristalsis principle according to which the prevalence to the treated fluid is impressed by a choke which extends along a flexible pipe (3a). The pump is made up of a rotor to which two or more rollers (3b) are applied, which, rotating, compress the flexible pipe and cause the fluid to advance. A fundamental element of the pump is the pipe which has to resist to cyclic compression stresses as long as possible, while deforming in elastic and non plastic way. It is exactly the elasticity that allows the pipe to regain its original dimensions and thus to guarantee the prevalence to the fluid and the suction ability, without creating turbulent flows which induce the formation of emulsions, which is cause of a low suction performance.

The sucked liquid mass is then conveyed in the lower portion of the phase separator through suitable pipes (8) arranged downstream of the peristaltic pump. The separation of the multi-phase liquid flow rate begins exactly in these pipes and is influenced by the section, length and inclination of the same with respect to the vertical axis of the phase separator. The input fluid in the phase separator is provided with laminar flow adjusted by the functioning regimen of the peristaltic pump and by the liquid column which is on the basis of the phase separator. The impact force of the flow rate fraction with lower density with the upper portion of the acceleration chamber arranged inside the separator deforms the fraction of liquid with lower density so that it is flattened, thus generating a meatus able to aggregate the next fractions of fluid with lower density introduced in the separator, independently of their dimension. The layer of fluid with lower density becomes ever thicker until it uncovers the gauged orifices (9) provided on the side shell of the acceleration chamber. So, the fluid with lower density goes out from the gauged orifices as threads which pushed upwards by the floatation force, thicken in the upper portion of the preferable conically shaped phase separator (6) to be then extracted through the gauged hole (15).

The height positioning of the acceleration chamber and the speed of the fluid with lower density inside this latter have to be such that the fluid with lower density is allowed to be deformed in a meatus, without creating turbulences. This fact improves the aggregation of the contaminants masses, thus reducing their quantity in the fluid to be treated, guaranteeing a more efficient separation (over 99,99%) of the phases present in the multi-phase fluid.

The acceleration chamber (11) arranged inside the separator is dimensioned according to the flow rates so that it is generated a controlled force of impact of the fluid with lower density against the upper portion of the acceleration chamber. Correlating said force of impact with the speed of the fluid to be treated entering the separator, the phenomenon of coalescence and the lamination of the particles to be separated are accelerated, thus allowing the collection of the phases with lower density (for example oils, sludge, etc...) towards the collection reservoir (7) and the constant flow of the contaminated phase (for example water) towards the outlet of the system (12).

In other words the fluid is conveyed in the separator (6) from the bottom with a controlled flow rate so that a turbulent flow is no more generated, but a speed which provides a "controlled break" of the superficial stress of the molecules of the oily particles, thus generating an aggregation of small drops and creating an always greater mass which makes a gravitational separation easier due to the different densities of the phases making up the fluid to be treated. Finally, the acceleration chamber (11) is provided with a plurality of output holes for the phases with lower density both along the shell (9) and on the suitably conically shaped upper portion (10) thereof. This fact allows a forced passage of the oily masses thus improving their aggregation and reduces also the residue quantity of contaminant in the fluid to be treated.

It is fundamental that the level of the liquid with lower density accumulated in the high portion of the first and second separation chambers, changes between a predetermined maximum and minimum value. Mainly, it is desirable that it is always present a layer with lower density inside the separation chambers to avoid the output of fluid with greater density from the output hole (15) for the phase with lower density. This fact, in fact, would nullify the operations carried out in order to separate the various phases. Obviously, the accumulation of fluid with lower density contained inside the reservoir depends on the kind of the sucked mixture; hence a technical problem to be confronted with when using the phase separators is to control the valve arranged on the discharge ducts of the fluids with different density so that the output flow rates of the two fluids are suitably balanced according to the input flow rates of the same, which are not known.

For doing so, the phase separator according to the present invention comprises an ultrasonic level sensor, installed in such a way that the level of each phase and the total level of the fluid in the second chamber are measured. Conveniently, such sensor can be installed on the upper portion of the cylinder (6), with an acoustically reflecting element, for example steel, positioned on the lower portion of the cylinder (6) so that the ultrasonic signal is reflected towards the sensor. According to what measured by the ultrasonic sensor, the control valves of the flow rate of the discharge ducts of the fluids with different density can be controlled, also automatically, to maintain the level of the fluid with lower density accumulated inside the separating chambers between a maximum and a minimum value. In such a way, it is possible that the system always works in conditions of maximum separation efficiency.

The separation chambers can be conveniently realized to provide a flow of the input mixture with prevailing vertical direction and point of introduction of the fluid to be treated arranged in the bottom, with the passage point of the fluid with lower density to the next second chamber and the final collection point of the phase with lower density arranged in the top.

This fact means that the flow is directed upwards and that the floatation force exerted by the fluid with greater density on the fluid with lower density is in the same direction as the path which the fluid with lower density makes to reach the collection point. In this way, the same floatation force contributes to dispose of the flow rate of the fluid with lower density to be separated, while suitable openings allow to dispose of the phase with greater density. Referring yet to figure 1, in fact, the communication between the two separation chambers can conveniently occur both by means of openings (10) positioned on the top of the first separation chamber and by means of the openings (9) positioned on the side wall thereof.

In this way, the portion of the fluid with lower density separated in the first chamber is collected in the upper portion of the phase separator in an area close to the collection point of the same fluid with lower density. The fluid with greater density and the residue portion yet dispersed in the same of the fluid with lower density fill the remaining volume of the separator and can suitably flow from the lower portion of the system. According to another particularly convenient geometric configuration, the phase separator and the acceleration chamber can be realized inside a sole cylindrically shaped volume, in which the two units are arranged concentrically.

The lower portion of the reservoir (6) is conically shaped as well to allow the removal of solid debris deposited during the separation step inside the phase separator and the acceleration chamber. The drainage of such solids is carried out by means of suitable pressure generated by the peristaltic pump, after closing the discharge ducts for example of the water and of the oil with the discharge valves (14, 5) of the solid debris, opened. So, more generally, it can be said that the method for separating fluids made up of two or more liquids with different density comprises the following steps: providing the fluid to be separated with the mechanic energy needed to balance the charge loss peculiar to the circuit by means of suitable pushing means; transforming the turbulent flow in laminar flow by means of suitable pump means provided with hydraulic conveyor; generating controlled impact forces inside the phase separator, which are correlated with the speed of fluids to be treated, which favor the lamination phenomenon, allowing the tapping of the phases with lower density towards a collection reservoir and the flow of the decontaminated phase towards the outlet of the system.

The system for accelerating the separation of fluids comprising liquids with different density is therefore an ideal system for the separation of the phases contaminating a fluid to be treated, provided that the different phases have a different density, in a great application field and without restrictions of any kind relating to fluids, flow rates, temperatures, regimens of flow and features of the place of use. It is indicated for applications in the following fields: metal mechanic field, iron and steel industry, oil industry, food industry, pharmaceutical field, navy, aeronautics, land ecology, sea ecology, chemical field.

## Claims

1. System for separation of at least two immiscible liquids with different density, comprising a fluid pushing means (3), a phase separator provided with two chambers (6,11), at least a reservoir (7) for collecting the phases with lower density, an ultrasonic level sensor for measuring the level of each phase and the total level of the fluid in the second chamber and an acoustically reflecting element positioned so that the ultrasonic signal is reflected towards the sensor, the two separation chambers (11,6) being realized inside a sole volume and arranged concentrically around the same vertical axis, input flow being provided by means of said pushing means (3) in said first chamber (11) arranged in the separator, in the first separation chamber (11) arranged in the separator being provided a plurality of holes (9,10) along the shell and on the suitably conically shaped upper portion for the output of the phases towards the second separation chamber (6), in the second separation chamber being provided an outlet for the phase with lower density (15) in the upper part and an outlet for the output of the phase with higher density in the lower part (12), said outlets (12,15) being provided with control valves for controlling outlet flow rate according to what measured by the said ultrasonic level sensor **Characterized in that** said fluid pushing means is a peristaltic pump (3) provided with a floating suction inlet (4), which is funnel shaped and auto-adjusting the flow rate and comprises at least a flexible pipe (3a) and a rotor to which two rollers (3b) are applied, which, rotating, compress the pipe and cause the fluid to advance

2. System according to claim 1, wherein said means for level measuring comprise an ultrasonic level measuring device.

3. System according to any one of the preceding claims, **characterized in that** the upper and the lower portion of the outer separation chamber are conically shaped.

4. Method for separating fluids made up of two or more liquid phases with different density by using the apparatus defined in claim 1, **characterized by** the following steps:
- introducing the fluid to be treated in a first and then in a second separation chamber where the lamination of the phase with lower density occurs in the upper portion of said separation chambers;
- collecting the phases with different density from different collection points positioned at different height with tapping flow rates for the various phases being balanced in such a way that inside the acceleration chambers a height of the layer of the phase with lower density is maintained between a minimum and a maximum preordered level.

## Patentansprüche

1. System zur Trennung von mindestens zwei nicht mischbaren Flüssigkeiten mit unterschiedlichen Dichten, mit einem Vorspannmittel (3) einer Flüssigkeit, einem Phasenabscheider mit zwei Kammern (6, 11), mindestens einem Behälter (7), um die Phasen mit einer geringeren Dichte zu sammeln, einem Ultraschallsensor um den Pegel jeder Phase und den gesamten Pegel der Flüssigkeit in der zweiten Kammer zu messen, und mit einem akustischen Reflexionselement das derart positioniert ist, dass das Ultraschallsignal gegen den Sensor reflektiert wird, wobei die beiden Kammern (11, 6) für die Trennung mit einem einzigen Volumen ausgebildet und konzentrisch um die gleiche vertikale Achse derart angeordnet sind, dass eine Einlassströmung durch die besagten Vorspannmittel (3) in der besagten ersten Kammer (11) erzeugt wird, die in dem Separator angeordnet ist, wobei in der ersten Trennkammer (11), die im Separator angeordnet ist, eine Vielzahl von Löchern (9, 10) entlang der Schale und auf dem oberen Abschnitt mit einer angemessen konischer Form ausgeformt sind, für die Ausgabe der Phasen in Richtung der zweiten Trennkammer (6), wobei in der zweiten Trennkammer (6) ein Ausgang für die Phase (15) mit geringeren Dichte in dem oberen Teil und ein Ausgang für die Emission der Phase mit höherer Dichte im unteren Teil (12) vorgesehen sind, wobei die besagten Ausgänge (12, 15) mit Steuerventilen vorgesehen sind, um die Durchflussrate am Ausgang in Übereinstimmung mit einer durch den besagten Ultraschallsensor gemessenen Durchflussrate zu steuern, **dadurch gekennzeichnet, dass** die besagten Vorspannmittel aus einer peristaltischen Pumpe (3) bestehen, die mit einem schwimmenden Saugeinlass (4) vorgesehen ist, der hülsenförmig ist und automatisch die Durchflussrate regelt, und mindestens ein flexibles Rohr (3a) und einen Rotor umfasst, auf dem zwei Rollen (3b) aufgebracht werden, die drehend das Rohr drücken und den Fortschritt der Flüssigkeit verursachen.

2. System nach Anspruch 1, wobei die besagten Mittel zur Pegelmessung ein Gerät zur Ultraschallmessung umfassen.

3. System nach einem der vorhergehenden Ansprüche, **dadurch gekennzeichnet, dass** der obere und untere Abschnitt der äußeren Trennkammer eine konische Form aufweisen.

4. Verfahren zur Trennung von Fluiden, die aus zwei oder mehr flüssigen Phasen mit unterschiedlicher Dichte durch die Verwendung der Vorrichtung nach Anspruch 1, bestehen, **gekennzeichnet durch** die folgenden Schritte:
- Einführung des zu behandelnden Fluides in eine erste und dann in eine zweite Trennkammer, in der die Schichtung der Phase mit einer geringeren Dichte in dem oberen Bereich der besagten Trennkammern erfolgt;
- Sammlung der Phasen mit unterschiedlicher Dichte aus verschiedenen Sammelpunkten, die auf unterschiedlichen Höhen mit verschiedenen Durchflussraten für die verschiedenen Phasen positioniert sind, wobei sie derart ausgeglichen werden, dass innerhalb der Beschleunigungskammern eine Höhe der Schicht der Phase mit einer geringeren Dichte zwischen einem vorbestimmten Minimal-und Maximalpegel behalten wird.

## Revendications

1. Système pour la séparation d'au moins deux liquides non miscibles avec des densités différentes, comprenant un moyen d'alimentation (3) d'un fluide, un séparateur de phase muni de deux chambres (6, 11), au moins un réservoir (7) pour collecter les phases avec une densité plus faible, un capteur ultrasonique de niveau pour mesurer le niveau de chaque phase et le niveau total du fluide dans la deuxième chambre et un élément réfléchissant acoustique positionné de telle sorte que le signal ultrasonique est réfléchi vers le capteur, les deux chambres de séparation (11, 6) étant réalisées dans un volume unique et disposées concentriques autour du même axe vertical, un flux d'entrée étant fourni par lesdits moyens d'alimentation (3) dans ladite première chambre (11) disposée dans le séparateur, dans la première chambre de séparation (11) disposée dans le séparateur une pluralité de trous (9, 10) étant formés le long de la coque et sur la partie supérieure de forme suffisamment conique pour la sortie des phases vers la deuxième chambre de séparation (6), dans la deuxième chambre de séparation (6) une sortie étant formée pour la phase de densité inférieure (15) dans la partie supérieure et une sortie pour l'émission de la phase de densité plus élevée dans le partie inférieure (12), lesdites sorties (12, 15) étant munies de vannes de régulation pour régler le débit de sortie en fonction du débit mesuré par ledit capteur de niveau ultrasonique, **caractérisé en ce que** lesdits moyens d'alimentation du fluide sont une pompe péristaltique (3) munie d'une entrée d'aspiration (4) flottante qui est en forme de manchon et ajuste automatiquement le débit d'écoulement et comprend au moins un tube flexible (3a) et un rotor sur lequel sont appliqués deux rouleaux (3b), qui pendant leur rotation compriment le tube amenant l'avancement du fluide.

2. Système selon la revendication 1, dans lequel lesdits moyens de mesure de niveau comprennent un dispositif de mesure de niveau ultrasonique.

3. Système selon l'une quelconque des revendications précédentes, **caractérisé en ce que** la partie supérieure et inférieure de la chambre de séparation extérieure ont une forme conique.

4. Procédé de séparation de fluides formés à partir de deux ou plusieurs phases liquides avec différentes densités, par l'utilisation de l'appareil selon la revendication 1, **caractérisé par** les opérations suivantes:
- introduction du fluide à traiter dans une première et puis dans une deuxième chambre de séparation dans laquelle se produit la stratification de la phase avec une densité inférieure dans la partie supérieure desdites chambres de séparation;
- collecte des phases ayant une densité différente par des différents points de collecte positionnés à des hauteurs différentes avec des débits différents pour les différentes phases qui sont équilibrées de telle manière, qu'à l'intérieur des chambres d'accélération une hauteur de la couche de la phase avec une plus faible densité est maintenue entre un niveau minimal et un niveau maximal prédéterminé.
